# EUROPEAN PATENT SPECIFICATION

(11) **EP 4 461 573 B1**
(45) Date of publication and mention of the grant of the patent: **11.06.2025**
(21) Application number: 24172810.4
(22) Date of filing: 26.04.2024
(51) Int. Cl.: B60H 1/32, F25B 7/00, F25B 27/00, F25D 11/00, F25D 29/00

(54) **HYBRID REFRIGERATION SYSTEM, CONTROL METHOD THEREOF, AND TRANSPORTATION REFRIGERATION VEHICLE**
HYBRIDKÜHLSYSTEM, STEUERUNGSVERFAHREN DAFÜR UND TRANSPORTKÜHLFAHRZEUG
SYSTÈME DE RÉFRIGÉRATION HYBRIDE, SON PROCÉDÉ DE COMMANDE ET VÉHICULE DE RÉFRIGÉRATION DE TRANSPORT

(30) Priority: 28.04.2023 CN 202310483165
(43) Date of publication of application: 13.11.2024
(73) Proprietor: Carrier Corporation, Palm Beach Gardens, FL 33418 (US)
(72) Inventor: YANG, Rong, Shanghai, 201206 (CN); CHEN, Linhui, Shanghai, 201206 (CN); GAO, Yunhai, Shanghai, 201206 (CN)
(74) Representative: Dehns

(56) References cited:
- CN-U- 206 812 752
- US-A- 3 159 982
- US-A- 4 742 689
- US-A1- 2013 269 785
- US-B1- 6 202 434

## Description

### FIELD OF THE INVENTION

The present invention relates to the field of refrigeration devices, and in particular to a hybrid refrigeration system, a control method thereof, and a transportion refrigeration vehicle.

### BACKGROUND OF THE INVENTION

The transportation refrigeration vehicles used in existing cold chain transportation generally use mechanical refrigeration devices. In order to reduce the temperature inside the cargo box to a set temperature quickly, the mechanical refrigeration device needs to have a large refrigeration capacity. Therefore, the mechanical refrigeration device itself and the devices that power it, such as combustion engines, lithium batteries, or fuel cells, need to be designed with a larger volume and weight.

On the other hand, liquid nitrogen refrigeration systems can achieve rapid cooling, but their cost is high and they are not suitable for long-distance transportation. CN 206812752 U describes a refrigeration system of a refrigerated truck wherein the truck carriage has a heat pump refrigeration unit and an additional liquid nitrogen refrigeration device,

### SUMMARY OF THE INVENTION

The object of the present application is to solve or at least alleviate the problems existing in the prior art.

According to a first aspect of the invention there is provided, a hybrid refrigeration system for a transportation refrigeration vehicle is provided, comprising:
a first refrigeration device for regulating a temperature of a cargo box of the transportation refrigeration vehicle, wherein the first refrigeration device is a liquid nitrogen based refrigeration device; and
a second refrigeration device for regulating the temperature of the cargo box of the transportation refrigeration vehicle, wherein the second refrigeration device is a mechanical refrigeration device;
a controller connected to the first refrigeration device and the second refrigeration device;
wherein, the controller is configured to determine whether a difference between the temperature of the cargo box and a set temperature is greater than or equal to a first threshold when receiving a refrigeration demand for the cargo box;
if so, start the first refrigeration device alone or start both the first refrigeration device and the second refrigeration device simultaneously; and
if not, start the second refrigeration device alone.

Optionally, when the first refrigeration device is started and the set temperature is reached, or when the difference between the temperature of the cargo box and the set temperature is less than the first threshold, the first refrigeration device is turned off and the second refrigeration device is used to maintain the temperature of the cargo box. Optionally, a selectable range of the first threshold is, for example, 2 °C -10 °C, such as 3 °C -8 °C.

Optionally, the first refrigeration device comprises a liquid nitrogen storage tank and a liquid nitrogen release control valve, where the first refrigeration device regulates the temperature of the cargo box by converting liquid nitrogen into nitrogen gas and transporting it to the cargo box, or the first refrigeration device further comprises a first cargo box heat exchanger, where the first refrigeration device regulates the temperature of the cargo box by converting the liquid nitrogen into nitrogen gas, passing it through the first cargo box heat exchanger and then discharging it to the environment.

Optionally, the second refrigeration device comprises a compressor, a condenser, a throttling device, and a second cargo box heat exchanger.

Optionally, the second refrigeration device is powered by a combustion engine, a lithium battery, or fuel cells.

Optionally, the first refrigeration device and the second refrigeration device share the same cargo box heat exchanger.

Optionally, in the event of a failure of either the first refrigeration device or the second refrigeration device, the other of the first refrigeration device or the second refrigeration device alone serves as a backup refrigeration device for temperature regulation of the cargo box.

According to a second aspect of the invention there is provided, a transportation refrigeration vehicle comprising a hybrid refrigeration system according to the various embodiments is provided, wherein the transportation refrigeration vehicle is powered by a combustion engine, a lithium battery, or fuel cells, where the hybrid refrigeration system and the transportation refrigeration vehicle share an energy supply device or respectively comprise independent energy supply devices.

According to a third aspect of the invention, a control method for a hybrid refrigeration system is further provided, comprising:
determining whether a difference between a temperature of a cargo box and a set temperature is greater than or equal to a first threshold when receiving a refrigeration demand for the cargo box;
if so, starting a first refrigeration device based on liquid nitrogen alone or starting both the first refrigeration device based on liquid nitrogen and a second refrigeration device based on mechanical refrigeration simultaneously; and
if not, starting the second refrigeration device alone.

Optionally, the method further comprises: turning off the first refrigeration device and using the second refrigeration device to maintain the temperature of the cargo box when the first refrigeration device is started and the set temperature is reached, or when the difference between the temperature of the cargo box and the set temperature is less than the first threshold. Optionally, a selectable range of the first threshold is, for example, 2 °C -10 °C, such as 3 °C -8 °C.

The device and method according to the embodiments of the present invention can reduce the requirement for the capacity of the mechanical refrigeration device on the vehicle, and thus reduce the weight and volume of the mechanical refrigeration device.

### BRIEF DESCRIPTION OF THE DRAWINGS

With reference to the accompanying drawings, the disclosure of the present application will become easier to understand. Those skilled in the art would easily understand that these drawings are for the purpose of illustration, and are not intended to limit the protection scope of the present application. In addition, in the figures, similar numerals are used to denote similar components, where:
FIG. 1 illustrates a schematic diagram of a transportation refrigeration vehicle;
FIG. 2 illustrates a schematic diagram of a transportation refrigeration vehicle;
FIG. 3 illustrates a schematic diagram of a transportation refrigeration vehicle; and
FIG. 4 illustrates a flowchart of a control method.

### DETAILED DESCRIPTION OF EMBODIMENT(S) OF THE INVENTION

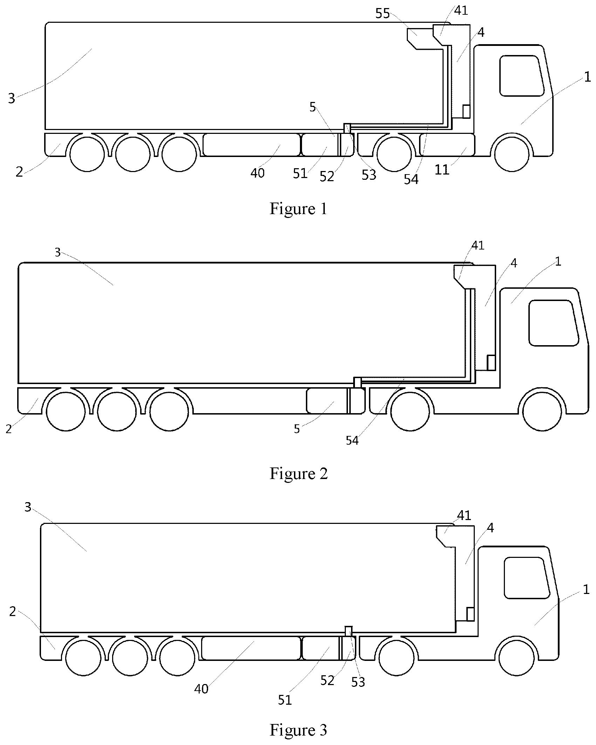

A hybrid refrigeration system for a transportation refrigeration vehicle according to various embodiments of the present invention will first be described in conjunction with FIGS. 1 to 3. The transportation refrigeration vehicle can be used for cold chain transportation, including food, drugs, and the like, which mainly comprise a tractor 1, a trailer 2, and a cargo box 3 arranged on a platform defined by the tractor 1 and the trailer 2, with its interior used to store goods that need cold chain transportation. In addition, the transportation refrigeration vehicle also comprises a hybrid refrigeration system according to various embodiments of the present invention.

The hybrid refrigeration system according to the embodiment shown in FIG. 1 comprises: a first refrigeration device 5 for regulating the temperature of the cargo box 3, where the first refrigeration device 5 is a liquid nitrogen based refrigeration device; a second refrigeration device 4 for regulating the temperature of the cargo box 3, where the second refrigeration device 4 is a mechanical refrigeration device; and a controller connected to the first refrigeration device 5 and the second refrigeration device 4; wherein, the controller is configured to determine whether the difference between the temperature of the cargo box and a set temperature is greater than or equal to a first threshold when receiving a refrigeration demand for the cargo box; if so, start the first refrigeration device 5 alone or start both the first refrigeration device 5 and the second refrigeration device 4 simultaneously; and if not, start the second refrigeration device 4 alone. By using this hybrid refrigeration system, the first refrigeration device 5 based on liquid nitrogen can be used to reduce the temperature of the cargo box quickly when the difference between the temperature of the cargo box and the set temperature is large, while the second refrigeration device 4 is used to assist in cooling and maintaining temperature. This reduces the requirement for the refrigeration capacity of the second refrigeration device 4, thereby reducing the weight of various components of the second refrigeration device 4 based on mechanical refrigeration as well as the weight of the energy supply devices that power them. When the difference between the temperature of the cargo box and the set temperature is small, there is no need to start the first refrigeration device 5 and the second refrigeration device 4 is used to achieve temperature regulation. In some embodiments, the selectable range of the first threshold is, for example, 2 °C -10 °C, and optionally, between, for example, 3 °C -8 °C.

In some embodiments, the controller may be further configured to turn off the first refrigeration device 5 and use the second refrigeration device 4 to maintain the temperature of the cargo box when using the first refrigeration device 5 and the temperature of the cargo box is reduced to the set temperature. In alternative embodiments, the controller can otherwise be configured to turn off the first refrigeration device 5 when the difference between the temperature of the cargo box and the set temperature is less than the first threshold, and then the second refrigeration device 4 alone regulates the temperature of the cargo box. In the case of using the first refrigeration device 5 for cooling, the second refrigeration device 4 can be turned on at any time after receiving the refrigeration demand but before the first refrigeration device 5 being turned off. For example, the second refrigeration device 4 can be turned on simultaneously with the first refrigeration device 5 to achieve the fastest cooling, or turned on when the first refrigeration device 5 is turned off, thereby saving energy. In the device according to the present invention, as the second refrigeration device 4 is only used for maintaining temperature and a small load of cooling, the rated capacity, weight, and volume of the second refrigeration device 4 can be reduced compared to conventional mechanical refrigeration devices. In addition, the time required to lower the temperature of the cargo box to its set point when the refrigeration device is first started can also be reduced.

In some embodiments, the first refrigeration device 5 comprises a liquid nitrogen storage tank 51, a liquid nitrogen storage sink 52, a liquid nitrogen release control valve 53, a liquid nitrogen transfer pipeline 54, and a first cargo box heat exchanger 55. In the embodiment shown in FIG. 1, the first refrigeration device 5 regulates the temperature of the cargo box by converting the liquid nitrogen in the liquid nitrogen storage tank 51 into a gaseous state through the control valve 53, and exchanging heat with the air in the cargo compartment through the first cargo box heat exchanger 55 and then discharging it into the environment. With continued reference to FIG, 3, in an alternative embodiment, the first refrigeration device 5 can regulate the temperature of the cargo box by converting the liquid nitrogen into a gaseous state through the control valve 53 and directly transporting it to the interior of the cargo box 3. In such an embodiment, several pipelines and nozzles can also be arranged to allow nitrogen gas to enter the cargo box 3 more evenly. In the embodiment illustrated, the liquid nitrogen storage tank 51 of the first refrigeration device 5 is arranged in the trailer 2 below the cargo box 3, and the trailer 2 may comprise a liquid nitrogen replenishment interface to replenish liquid nitrogen at the station, or the liquid nitrogen storage tank 51 may be replaced after the journey is completed.

In some embodiments, the second refrigeration device 4 may comprise a compressor, a condenser, a throttling device, and a second cargo box heat exchanger 41 connected into a circulating circuit. That is, the second refrigeration device 4 comprises a traditional refrigeration circuit comprising a compressor. In the embodiment of FIG. 1, the second refrigeration device 4 is powered by a lithium battery 40. In alternative embodiments, fuel cells can also be used to replace the lithium battery 40. Or, as shown in FIG. 2, the second refrigeration device 4 can be powered by a traditional combustion engine. As mentioned above, due to the addition of the first refrigeration device 5 based on liquid nitrogen, the capacity of components, such as the compressor, in the second refrigeration device 4 can be reduced, and their weight and volume can also be reduced. In addition, the weight and volume of the lithium battery 40 that powers the second refrigeration device 4 can also be reduced, which is crucial for vehicles powered by new energy sources such as lithium batteries, as the reduced weight means longer range. For example, as shown in FIG. 1, the tractor 1 may include an additional lithium battery or fuel cells 11, which can help to achieve a longer range for the transportion refrigeration vehicle when the weight of the second refrigeration device 4 is reduced. In some embodiments, the second refrigeration device 4 may be arranged at the front of the cargo box 3, and the energy supply device 40 thereof may also be arranged in the trailer 2.

As shown in FIG. 2, in some embodiments, the first refrigeration device 5 and the second refrigeration device 4 may also share the same cargo box heat exchanger 41. The cargo box heat exchanger 41 may comprise a first flow path for discharging nitrogen gas into the environment and a second flow path for the refrigerant in the second refrigeration device 4, as well as a fan for facilitating heat exchange between the air in the cargo box and the nitrogen gas in the first flow path and the refrigerant in the second flow path. The pipeline 54 of the first refrigeration device can be connected to the first flow path. In addition, in some embodiments, the first refrigeration device 5 and the second refrigeration device 4 can serve as backup refrigeration systems for each other. That is, in the event of a failure of either the first refrigeration device 5 or the second refrigeration device 4, the other of the first refrigeration device 5 and the second refrigeration device 4 can alone serve as a backup refrigeration device for temperature regulation of the cargo box. That is, the controller is configured to use the one in normal operation to regulate the temperature inside the cargo box 3 in the event of a failure of the first refrigeration device 5 or the second refrigeration device 4, thus allowing the hybrid refrigeration system to cope with the failure of a single refrigeration device and try to preserve important goods being transported in the cargo box.

According to another aspect, for a transportation refrigeration vehicle, it may include a hybrid refrigeration system according to any of the above embodiments. The transportation refrigeration vehicle may be driven by a combustion engine, a lithium battery, or fuel cells, wherein the hybrid refrigeration system and the transportation refrigeration vehicle may share the combustion engine, the lithium battery, or the fuel cells, or they may have independent energy supply devices.

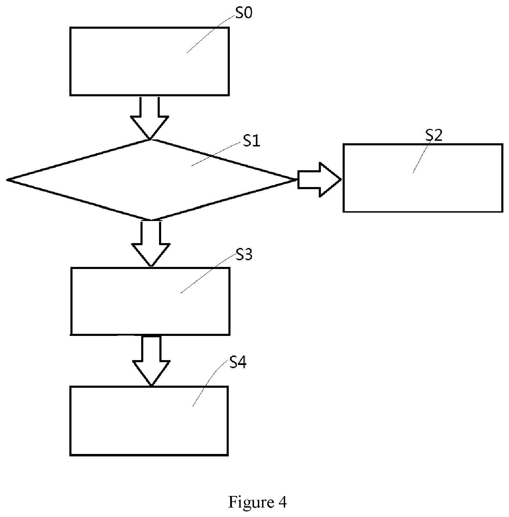

With continued reference to FIG. 4, a control method for a hybrid refrigeration system according to an embodiment of the present invention will be described. The control method may comprise: S0: receiving a refrigeration demand for a cargo box; S1: determining whether the difference between the temperature of the cargo box and a set temperature is greater than or equal to a first threshold; if not, proceed to step S2 to start the second refrigeration device alone; and if yes, proceed to step S3 to start the first refrigeration device based on liquid nitrogen alone or start both the first refrigeration device based on liquid nitrogen and the second refrigeration device based on mechanical refrigeration simultaneously. In some embodiments, the method further comprises: step S4: turning off the first refrigeration device and using the second refrigeration device to maintain the temperature of the cargo box when the first refrigeration device is started and the set temperature is reached, or when the difference between the temperature of the cargo box and the set temperature is less than the first threshold. Optionally, the selectable range of the first threshold is, for example, 2 °C -10 °C, such as between 3 °C -8 °C.

The specific embodiments described above in the present application are merely intended to describe the principles of the present application more clearly, wherein various components are clearly shown or described to facilitate the understanding of the principles of the present invention. Those skilled in the art may, without departing from the scope of the present application, make various modifications or changes to the present application. Therefore, it should be understood that these modifications or changes should be included within the scope of patent protection of the present application. The scope of the invention is defined by the appended claims.

## Claims

1. A hybrid refrigeration system for a transportation refrigeration vehicle, comprising:
a first refrigeration device (5) for regulating a temperature of a cargo box (3) of the transportation refrigeration vehicle, wherein the first refrigeration device is a liquid nitrogen based refrigeration device; and
a second refrigeration device (4) for regulating the temperature of the cargo box of the transportation refrigeration vehicle, wherein the second refrigeration device is a mechanical refrigeration device;
a controller connected to the first refrigeration device and the second refrigeration device;
wherein, the controller is configured to determine whether a difference between the temperature of the cargo box and a set temperature is greater than or equal to a first threshold when receiving a refrigeration demand for the cargo box;
if so, start the first refrigeration device alone or start both the first refrigeration device and the second refrigeration device simultaneously; and
if not, start the second refrigeration device alone.

2. The hybrid refrigeration system according to claim 1, wherein when the first refrigeration device is started and the set temperature is reached, or when the difference between the temperature of the cargo box and the set temperature is less than the first threshold, the first refrigeration device is turned off and the second refrigeration device is used to maintain the temperature of the cargo box, where optionally, the first threshold is selectable from a range of 2 °C -10 °C, such as 3 °C -8 °C.

3. The hybrid refrigeration system according to claim 1 or 2, wherein the first refrigeration device comprises a liquid nitrogen storage tank (51) and a liquid nitrogen release control valve (53), where the first refrigeration device regulates the temperature of the cargo box by converting liquid nitrogen into nitrogen gas and transporting it to the cargo box, or the first refrigeration device further comprises a first cargo box heat exchanger (55), where the first refrigeration device regulates the temperature of the cargo box by converting the liquid nitrogen into nitrogen gas, passing it through the first cargo box heat exchanger and then discharging it to the environment.

4. The hybrid refrigeration system according to claim 1 or 2, wherein the second refrigeration device comprises a compressor, a condenser, a throttling device, and a second cargo box heat exchanger (41) connected into a circulating circuit.

5. The hybrid refrigeration system according to claim 4, wherein the second refrigeration device is powered by a combustion engine, a lithium battery (40), or fuel cells (11).

6. The hybrid refrigeration system according to claim 1 or 2, wherein the first refrigeration device and the second refrigeration device share the same cargo box heat exchanger (41).

7. The hybrid refrigeration system according to claim 1 or 2, wherein in the event of a failure of either the first refrigeration device or the second refrigeration device, the other of the first refrigeration device or the second refrigeration device alone serves as a backup refrigeration device for temperature regulation of the cargo box.

8. A transportation refrigeration vehicle comprising a hybrid refrigeration system according to any of claims 1 to 7, wherein the transportation refrigeration vehicle is powered by a combustion engine, a lithium battery (40), or fuel cells (11), where the hybrid refrigeration system and the transportation refrigeration vehicle share an energy supply device or respectively comprise independent energy supply devices.

9. A control method for a hybrid refrigeration system according to any of claims 1-7, comprising:
determining (S1) whether a difference between a temperature of a cargo box (3) and a set temperature is greater than or equal to a first threshold when receiving a refrigeration demand for the cargo box;
if so, starting (S3) a first refrigeration device (5) based on liquid nitrogen alone or starting both the first refrigeration device based on liquid nitrogen and a second refrigeration device based on mechanical refrigeration simultaneously; and
if not, starting (S2) the second refrigeration device (4) alone.

10. The control method according to claim 9, wherein the method further comprises: turning off (S4) the first refrigeration device (5) and using the second refrigeration device to maintain the temperature of the cargo box (3) when the first refrigeration device is started and the set temperature is reached, or when the difference between the temperature of the cargo box and the set temperature is less than the first threshold, where optionally, a selectable range of the first threshold is, for example, 2 °C -10 °C, such as 3 °C -8 °C.

## Patentansprüche

1. Hybridkühlsystem für ein Transportkühlfahrzeug, umfassend:
eine erste Kühlvorrichtung (5) zum Regulieren einer Temperatur einer Frachtbox (3) des Transportkühlfahrzeugs, wobei die erste Kühlvorrichtung eine auf Flüssigstickstoff basierende Kühlvorrichtung ist; und
eine zweite Kühlvorrichtung (4) zum Regulieren der Temperatur der Frachtbox des Transportkühlfahrzeugs, wobei die zweite Kühlvorrichtung eine mechanische Kühlvorrichtung ist;
eine Steuerung, die mit der ersten Kühlvorrichtung und der zweiten Kühlvorrichtung verbunden ist;
wobei die Steuerung dazu konfiguriert ist, bei Empfangen einer Kühlanforderung für die Frachtbox zu bestimmen, ob eine Differenz zwischen der Temperatur der Frachtbox und einer eingestellten Temperatur größer als oder gleich einem ersten Schwellenwert ist;
wenn ja, nur die erste Kühlvorrichtung zu starten oder sowohl die erste Kühlvorrichtung als auch die zweite Kühlvorrichtung gleichzeitig zu starten; und
wenn nicht, nur die zweite Kühlvorrichtung zu starten.

2. Hybridkühlsystem nach Anspruch 1, wobei, wenn die erste Kühlvorrichtung gestartet und die eingestellte Temperatur erreicht wird oder wenn die Differenz zwischen der Temperatur der Frachtbox und der eingestellten Temperatur kleiner ist als der erste Schwellenwert, die erste Kühlvorrichtung ausgeschaltet wird und die zweite Kühlvorrichtung verwendet wird, um die Temperatur der Frachtbox aufrechtzuerhalten, wobei der erste Schwellenwert optional aus einem Bereich von 2 °C-10 °C, wie etwa 3 °C-8 °C, wählbar ist.

3. Hybridkühlsystem nach Anspruch 1 oder 2, wobei die erste Kühlvorrichtung einen Flüssigstickstoff-Speichertank (51) und ein Flüssigstickstoff-Ablasssteuerventil (53) umfasst, wobei die erste Kühlvorrichtung die Temperatur der Frachtbox reguliert, indem sie Flüssigstickstoff in Stickstoffgas umwandelt und zu der Frachtbox transportiert, oder die erste Kühlvorrichtung ferner einen ersten Frachtbox-Wärmetauscher (55) umfasst, wobei die erste Kühlvorrichtung die Temperatur der Frachtbox reguliert, indem sie den Flüssigstickstoff in Stickstoffgas umwandelt, es durch den ersten Frachtbox-Wärmetauscher leitet und es dann an die Umgebung abgibt.

4. Hybridkühlsystem nach Anspruch 1 oder 2, wobei die zweite Kühlvorrichtung einen Kompressor, einen Kondensator, eine Drosselvorrichtung und einen zweiten Frachtbox-Wärmetauscher (41) umfasst, die in einem Umwälzkreislauf verbunden sind.

5. Hybridkühlsystem nach Anspruch 4, wobei die zweite Kühlvorrichtung von einem Verbrennungsmotor, einer Lithiumbatterie (40) oder Brennstoffzellen (11) mit Leistung versorgt wird.

6. Hybridkühlsystem nach Anspruch 1 oder 2, wobei die erste Kühlvorrichtung und die zweite Kühlvorrichtung den gleichen Frachtbox-Wärmetauscher (41) gemeinsam nutzen.

7. Hybridkühlsystem nach Anspruch 1 oder 2, wobei bei einem Ausfall entweder der ersten Kühlvorrichtung oder der zweiten Kühlvorrichtung nur die andere der ersten Kühlvorrichtung oder der zweiten Kühlvorrichtung als Sicherungskühlvorrichtung zur Temperaturregulierung der Frachtbox dient.

8. Transportkühlfahrzeug, umfassend ein Hybridkühlsystem nach einem der Ansprüche 1 bis 7, wobei das Transportkühlfahrzeug von einem Verbrennungsmotor, einer Lithiumbatterie (40) oder Brennstoffzellen (11) mit Leistung versorgt wird, wobei das Hybridkühlsystem und das Transportkühlfahrzeug eine Energieversorgungsvorrichtung gemeinsam nutzen oder jeweils unabhängige Energieversorgungsvorrichtungen umfassen.

9. Steuerungsverfahren für ein Hybridkühlsystem nach einem der Ansprüche 1-7, umfassend:
Bestimmen (S1), ob eine Differenz zwischen einer Temperatur einer Frachtbox (3) und einer eingestellten Temperatur größer als oder gleich einem ersten Schwellenwert ist, wenn eine Kühlanforderung für die Frachtbox empfangen wird;
wenn ja, Starten (S3) nur einer ersten auf Flüssigstickstoff basierenden Kühlvorrichtung (5) oder Starten sowohl der ersten auf Flüssigstickstoff basierenden Kühlvorrichtung als auch einer zweiten auf mechanischer Kühlung basierenden Kühlvorrichtung; und
wenn nicht, Starten (S2) nur der zweiten Kühlvorrichtung (4).

10. Steuerverfahren nach Anspruch 9, wobei das Verfahren ferner Folgendes umfasst: Ausschalten (S4) der ersten Kühlvorrichtung (5) und Verwenden der zweiten Kühlvorrichtung, um die Temperatur der Frachtbox (3) aufrechtzuerhalten, wenn die erste Kühlvorrichtung gestartet wird und die eingestellte Temperatur erreicht wird oder wenn die Differenz zwischen der Temperatur der Frachtbox und der eingestellten Temperatur kleiner ist als der erste Schwellenwert, wobei optional ein wählbarer Bereich des ersten Schwellenwerts beispielsweise 2 °C-10 °C, wie etwa 3 °C-8 °C, beträgt.

## Revendications

1. Système de réfrigération hybride pour un véhicule de réfrigération de transport, comprenant :
un premier dispositif de réfrigération (5) pour réguler la température d'une carrosserie cargo (3) du véhicule de réfrigération de transport, dans lequel le premier dispositif de réfrigération est un dispositif de réfrigération à base d'azote liquide ; et
un second dispositif de réfrigération (4) pour réguler la température de la carrosserie cargo du véhicule de réfrigération de transport, dans lequel le second dispositif de réfrigération est un dispositif de réfrigération mécanique ;
un dispositif de commande connecté au premier dispositif de réfrigération et au second dispositif de réfrigération ;
dans lequel le dispositif de commande est configuré pour déterminer si une différence entre la température de la carrosserie cargo et une température de consigne est supérieure ou égale à un premier seuil lors de la réception d'une demande de réfrigération pour la carrosserie cargo ;
si tel est le cas, démarrer le premier dispositif de réfrigération uniquement ou démarrer simultanément le premier dispositif de réfrigération et le second dispositif de réfrigération ; et
dans le cas contraire, démarrer le second dispositif de réfrigération uniquement.

2. Système de réfrigération hybride selon la revendication 1, dans lequel, lorsque le premier dispositif de réfrigération est démarré et que la température de consigne est atteinte, ou lorsque la différence entre la température de la carrosserie cargo et la température de consigne est inférieure au premier seuil, le premier dispositif de réfrigération est éteint et le second dispositif de réfrigération est utilisé pour maintenir la température de la carrosserie cargo, dans lequel, éventuellement, le premier seuil est sélectionnable dans une plage allant de 2 °C à 10 °C, telle que de 3 °C à 8 °C.

3. Système de réfrigération hybride selon la revendication 1 ou 2, dans lequel le premier dispositif de réfrigération comprend un réservoir de stockage d'azote liquide (51) et une vanne de régulation de libération d'azote liquide (53), dans lequel le premier dispositif de réfrigération régule la température de la carrosserie cargo en convertissant l'azote liquide en azote gazeux et en le transportant vers la carrosserie cargo, ou le premier dispositif de réfrigération comprend en outre un premier échangeur de chaleur de carrosserie cargo (55), dans lequel le premier dispositif de réfrigération régule la température de la carrosserie cargo en convertissant l'azote liquide en azote gazeux, en le faisant passer à travers le premier échangeur de chaleur de carrosserie cargo, puis en l'évacuant dans l'environnement.

4. Système de réfrigération hybride selon la revendication 1 ou 2, dans lequel le second dispositif de réfrigération comprend un compresseur, un condenseur, un dispositif d'étranglement et un second échangeur de chaleur de carrosserie cargo (41) reliés dans un circuit de circulation.

5. Système de réfrigération hybride selon la revendication 4, dans lequel le second dispositif de réfrigération est alimenté par un moteur à combustion, une batterie au lithium (40) ou des piles à combustible (11).

6. Système de réfrigération hybride selon la revendication 1 ou 2, dans lequel le premier dispositif de réfrigération et le second dispositif de réfrigération partagent le même échangeur de chaleur de carrosserie cargo (41).

7. Système de réfrigération hybride selon la revendication 1 ou 2, dans lequel, en cas de défaillance soit du premier dispositif de réfrigération, soit du second dispositif de réfrigération, l'autre dispositif parmi le premier dispositif de réfrigération ou le second dispositif de réfrigération est le seul à servir de dispositif de réfrigération de secours pour la régulation de la température de la carrosserie cargo.

8. Véhicule de réfrigération de transport comprenant un système de réfrigération hybride selon l'une quelconque des revendications 1 à 7, dans lequel le véhicule de réfrigération de transport est alimenté par un moteur à combustion, une batterie au lithium (40) ou des piles à combustible (11), dans lequel le système de réfrigération hybride et le véhicule de réfrigération de transport partagent un dispositif d'alimentation en énergie ou comprennent respectivement des dispositifs d'alimentation en énergie indépendants.

9. Procédé de commande d'un système de réfrigération hybride selon l'une quelconque des revendications 1 à 7, consistant à :
déterminer (S1) si une différence entre une température d'une carrosserie cargo (3) et une température de consigne est supérieure ou égale à un premier seuil lors de la réception d'une demande de réfrigération pour la carrosserie cargo ;
si tel est le cas, démarrer (S3) uniquement un premier dispositif de réfrigération (5) à base d'azote liquide ou démarrer simultanément le premier dispositif de réfrigération à base d'azote liquide et un second dispositif de réfrigération à base de réfrigération mécanique ; et
dans le cas contraire, démarrer (S2) le second dispositif de réfrigération (4) uniquement.

10. Procédé de commande selon la revendication 9, dans lequel le procédé consiste en outre à : arrêter (S4) le premier dispositif de réfrigération (5) et utiliser le second dispositif de réfrigération pour maintenir la température de la carrosserie cargo (3) lorsque le premier dispositif de réfrigération est démarré et que la température de consigne est atteinte, ou lorsque la différence entre la température de la carrosserie cargo et la température de consigne est inférieure au premier seuil, dans lequel éventuellement une plage sélectionnable du premier seuil est, par exemple, de 2 °C à 10 °C, telle que de 3 °C à 8 °C.
